**Europäisches Patentamt**

**European Patent Office**

**Office européen des brevets**

(19)

(11) Numéro de publication : **0 309 304 B1**

(12)

# FASCICULE DE BREVET EUROPEEN

(45) Date de publication du fascicule du brevet :
**19.02.92 Bulletin 92/08**

(51) Int. Cl.⁵ : **G01D 11/30, F15B 15/28**

(21) Numéro de dépôt : **88402179.1**

(22) Date de dépôt : **30.08.88**

(54) **Capteur de position électrique et/ou électronique.**

(30) Priorité : **16.09.87 FR 8712806**

(43) Date de publication de la demande :
**29.03.89 Bulletin 89/13**

(45) Mention de la délivrance du brevet :
**19.02.92 Bulletin 92/08**

(84) Etats contractants désignés :
**AT BE CH DE ES FR GB GR IT LI LU NL SE**

(56) Documents cités :
**FR-A- 2 073 199**
**GB-A- 2 180 914**
**US-A- 4 230 023**

(73) Titulaire : **CELDUC**
**Rue Ampère**
**F-42290 Sorbiers (FR)**

(72) Inventeur : **Combette, Marc**
**Résidence Bel Air**
**F-42480 La Fouillouse (FR)**

(74) Mandataire : **Hirsch, Marc-Roger**
**Cabinet Hirsch 34 rue de Bassano**
**F-75008 Paris (FR)**

**Description**

La présente invention se rapporte à un capteur ou détecteur électrique et/ou électronique pour un élément mobile dont la position est à repérer par rapport à un élément ou poste fixe, ce capteur comprenant des moyens de fixation sur l'élément ou le poste fixe un élément détecteur adapté en saillie sur ces moyens de fixation, un organe de connexion de l'élément détecteur aux moyens de fixation, et au moins un conducteur de raccordement destiné à relier l'élément détecteur à un système de surveillance.

Les systèmes d'asservissement en séquence utilisent de nombreux capteurs ou détecteurs de position qui permettent de repérer l'achèvement d'une séquence, telle que la course du piston d'un vérin. Le réglage de la position de ces détecteurs par rapport aux organes mobiles dont ils contrôlent le déplacement, de même que le maintien en état de leurs éléments de détection, eux-mêmes relativement fragiles, entraînent généralement des frais plus élevés que ceux correspondant à l'organe mobile proprement dit. Chaque fois que l'un de ces détecteurs est défaillant, il faut en effet, non seulement procéder à son échange, ce qui oblige à décâbler et recâbler les conducteurs mais le plus souvent à un nouveau réglage de sa position et à sa fixation qui se révèlent souvent malaisés.

La présente invention se propose de faciliter la mise en place et le réglage de position de capteurs tels que les détecteurs de position, tout en permettant l'échange aisé de l'élément de capteur proprement dit.

On connaît de GB-A-2 180 914 un ensemble piston cylindre dans lequel le tube de cylindre est muni de rails de guidage sur chacun desquel peut glisser une pièce de montage portant un élément détecteur. Le rail de guidage est entouré partiellement par la pièce de montage entre une première paroi latérale et une languette élastique sur laquelle peut venir s'appuyer une ou plusieurs vis de pincement afin de bloquer la pièce de montage et donc l'élément détecteur en position sur le corps de cylindre. L'élément détecteur constitué par un interrupteur de proximité est amovible sur la pièce de montage où il est monté en saillie frontale pour repérer l'image magnétique du piston mobile dans le cylindre.

Le dispositif proposé dans GB-A-2 180 914 exige que le tube de cylindre du vérin soit équipé d'au moins un rail longitudinal permettant la fixation de la pièce de montage ou que le vérin soit muni de tirants longitudinaux permettant la même fonction de montage de la pièce de montage de l'élément détecteur. La présente invention se propose de réaliser un capteur qui puisse être fixé aisément, avec précision et de façon très ferme, sur le cylindre extérieur d'un vérin pourvu d'une surface extérieure cylindrique lisse sans aucune surface de fixation en saillie tel qu'un tirant.

A cet effet, selon l'invention, les moyens de fixation sont constitués par un collier de serrage annulaire, monobloc avec une enveloppe qui contient le raccordement électrique entre le conducteur et l'élément détecteur et est réalisée en un matériau isolant électrique et élastique, le collier de serrage annulaire est muni de deux prolongements élastiques qui sont susceptibles de se rapprocher l'un vers l'autre en coopération avec des moyens de serrage, l'élément détecteur étant disposé en porte-à-faux latéral par rapport au plan médian du collier, de manière que l'axe de vision de l'élément détecteur puisse être positionné fermement en face d'une partie de l'élément ou du poste fixe qui est située hors de la zone recouverte par le collier de serrage et le conducteur de raccordement est raccordé à l'enveloppe, sensiblement de façon tangentielle par rapport au cercle du collier de serrage, afin d'éviter toute traction axiale ou engagement axial du conducteur de raccordement, par rapport au collier ou respectivement à l'élément mobile.

La mise en place du capteur sur un cylindre à surface extérieure lisse requiert ainsi uniquement le serrage du collier sans aucune opération d'usinage et sans aucune pièce de fixation rapportée. En réalisant un pré-serrage du collier après une première mise en place grossière du capteur, il est possible de vaincre la friction du collier, sur l'enveloppe où il est serré, par des poussées ou des chocs légers pour assurer la mise en place du capteur, contrôlée par exemple en fonction des résultats électriques et/ou électroniques obtenus après sa mise en place. Lorsque le capteur est défaillant après une certaine durée de service, pour procéder à son échange, on peut, soit remplacer le capteur par un nouveau capteur, soit débrocher le capteur défaillant et embrocher à sa place l'élément de rechange, le cas échéant en le verrouillant par un vissage de maintien; dans ce dernier cas, la position du nouvel élément capteur n'est pas changée par rapport à celle du précédent. La fixation du capteur et sa mise en position sont ainsi réalisées à titre définitif pour un élément capteur qui est, lui, parfaitement amovible.

Selon un autre mode de réalisation de l'invention, l'enveloppe de raccordement électrique entre le conducteur de raccordement et l'organe de connexion forme un bloc à plusieurs faces et en saillie par rapport à la surface extérieure du collier de serrage et le conducteur de raccordement est raccordé à l'enveloppe du côté des moyens de serrage et de façon décalée par rapport à ces moyens de serrage, de manière à ne pas gêner l'accès aux moyens de serrage placés du côté dudit conducteur.

Selon un autre mode encore de réalisation de l'invention, les broches et/ou les bornes de l'organe de connexion sont orientées perpendiculairement à une face de l'enveloppe sensiblement parallèle au plan médian du collier, de manière que lesdites broches ou bornes soient sensiblement parallèles à l'axe médian de ce collier. L'enveloppe peut être obturée, après mise en place de l'élément détecteur, par un couvercle qui porte au moins une fenêtre transparente de vision d'un témoin lumineux du capteur. L'une des faces externe de l'enveloppe peut porter des signes de repérage du dispositif de détection ou des emplacements pour la mise en place de tels signes.

Lorsque le capteur selon l'invention est appliqué à un organe mobile à repérer tel qu'un piston ou une tige de piston de vérin à corps cylindrique, le collier de serrage annulaire est monté serré sur la surface extérieure du corps cylindrique de vérin, en orientant le ou les conducteurs de raccordement tangentiellement par rapport à la section transversale du corps de vérin et en plaçant la partie active de l'élément détecteur en porte-à-faux latéral en face d'un point à repérer sur l'organe mobile, par rotation du collier de serrage et glissement axial de celui-ci sur la surface extérieure du corps de vérin, de manière à viser avec cette partie active une partie du corps de vérin située hors du contact avec le collier de serrage.

D'autres buts, avantages et caractéristiques apparaîtront à la lecture de la description d'un mode de réalisation de l'invention, faite à titre non limitatif et en regard du dessin annexé où:

– la figure 1 est une vue en perspective partiellement éclatée du dispositif de capteur selon l'invention, avant sa mise en place sur une enveloppe d'un élément mobile à contrôler et avant le montage de l'élément de capteur amovible;

– la figure 2 est une vue en perspective du dispositif de capteur selon l'invention, fixé et réglé en position sur l'enveloppe d'un organe mobile à contrôler.

– les figures 3 et 4 représentent des vues latérale et de l'arrière respectivement d'un autre mode de réalisation d'un dispositif de capteur selon l'invention.

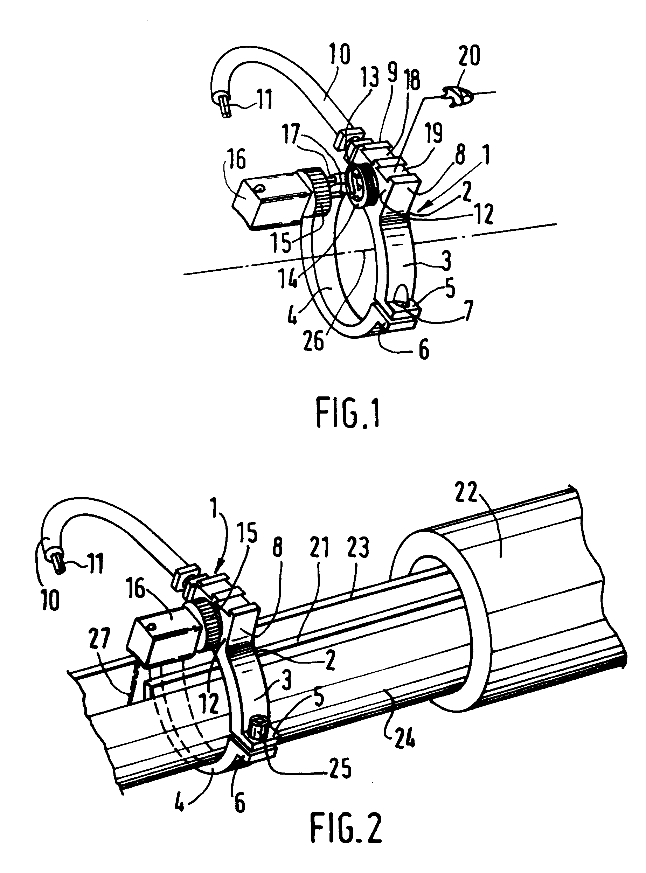

On voit sur la figure 1 que le support d'un capteur 1 présente la forme générale d'un collier annulaire monobloc 2 à deux branches élastiques 3 et 4 se refermant l'une vers l'autre, à leur extrémité libre, par l'intermédiaire d'un prolongement 5, 6. Afin de réaliser un moyen de serrage du collier 2, les prolongements 5, 6 sont prévus respectivement avec un alésage 7 et un écrou noyé (non visible sur les vues en perspective).

Le collier de serrage 2 réalisé en matériau isolant électrique relativement élastique, de préférence en matière plastique, est surmonté d'un bloc 8 à plusieurs faces, monobloc avec lui. Sur l'une des faces latérales 9 du monobloc isolé 8 sort, sensiblement de façon tangentielle par rapport au cercle extérieur du collier 2, un fil isolé 10 à plusieurs conducteurs de raccordement 11 à un circuit de surveillance alimenté par le capteur 1 et non représenté.

Sur l'une des faces axiales 12 du bloc isolé 8 fait saillie parallèlement à l'axe du collier 2 un connecteur multibornes 13 de raccordement aux conducteurs 11, entouré d'un manchon fileté 14 sur lequel viendra se visser la bague filetée 15 du raccord d'un élément détecteur interchangeable 16. Les bornes de raccordement (femelles de préférence) du connecteur 13 forment, avec les broches 17 (broches mâles) solidaires de l'élément interchangeable 16 et le manchon fileté 14 coopérant avec la bague 15, un organe de connexion amovible mécanique et électrique, pour l'élément détecteur 16 monté sur le bloc isolé 8, cet organe de connexion permettant de raccorder les fils 11 de sortie vers l'extérieur à l'élément détecteur 16. On remarque à la partie supérieure (selon la figure 1) ou extérieure du bloc isolé 8, des rainures 18 et 19 qui présentent un profil transversal en queue d'aronde et dans chacune desquelles on peut glisser des repères amovibles 20 permettant de désigner et repérer le capteur 1, par exemple après son montage. Les éléments détecteurs 16 les plus couramment utilisés sont des détecteurs à effet Hall ou à lames souples (appelés encore détecteurs Reed) de 25 à 29 mm de longueur et aptes à travailler dans une large plage de température (par exemple de -40 à +150°C). Ces détecteurs à faible consommation électrique sont parfaitement interchangeables et sont munis pour cela de connecteurs vissés ou à longues broches garantissant la précision et la fidélité de leur fixation sur le bloc isolé 8.

La mise en position et le fonctionnement du dispositif de capteur 1 qui vient d'être décrit vont maintenant être explicités en référence à la figure 2. On se propose par exemple de détecter la sortie d'une barre mobile 21 actionnée par un vérin 22 dont la tige n'est pas représentée (et peut constituer la barre mobile elle-même). La barre mobile 21 qui comporte un élément d'excitation du capteur constitué généralement par un aimant, est entourée par une enveloppe formée de plaques de protection 23 et 24.

Pour mettre en place le capteur 16, on le monte préalablement sur le collier 2 à l'aide de l'organe de connexion 13, 14, 15, 17 et l'on ouvre les branches élastiques 3 et 4 pour qu'elles s'engagent en collier annulaire sur les plaques 23 et 24 en entourant celles-ci. On procède ensuite à un serrage préalable du collier 2 sur ces plaques 23 et 24 à l'aide d'une vis de serrage 25 qui traverse l'alésage 7 du prolongement 5 et vient se visser dans l'écrou non représenté qui est noyé dans le prolongement 6.

Après le serrage préalable du collier 2 sur les plaques 23 et 24, on peut, en exerçant des efforts modérés, faire tourner le collier sur les plaques de quelques degrés et le déplacer axialement selon son axe 26 qui se confond alors avec l'axe du vérin 22. Grâce à ces petits déplacements exercés à l'encontre de la friction du collier 2 sur les plaques 23 et 24, il est possible d'amener l'axe de vision 27 (optique, électrique, magnétique ou autre) de l'élément détecteur 16, c'est-à-dire sa partie active, dans la position exacte où l'élément détecteur doit détecter ou repérer l'arrivée de la barre mobile 21. Le branchement des fils 11 sur les circuits de contrôle activés par le capteur 1 permet d'ailleurs de s'assurer du point de détection effective de la barre mobile 21 constituant ici l'élément mobile à détecter. Après réglage définitif de la position de la partie active du détecteur 16 (l'axe de vision 27), on procède au serrage définitif du collier 2 à l'aide de la vis 25 et le bloc isolé 8 support de détecteur reste ainsi en place de façon ferme et le restera lorsque l'on procédera ultérieurement à l'échange d'un élément détecteur 16 défaillant.

On voit, à partir du mode de réalisation illustré par la figure 2, que le dispositif de capteur 1 selon l'invention peut, par exemple, s'appliquer avantageusement à la détection de l'arrivée en fin de course du piston ou de la tige de piston d'un vérin, tel qu'un vérin pneumatique. Le collier annulaire 2 est alors simplement serré sur l'extérieur du corps cylindrique du vérin en orientant le fil isolé 10 tangentiellement par rapport à la section transversale du corps de vérin. L'organe de connexion 13, 14, 15 et 17 est automatiquement orienté parallèlement à l'axe du vérin pour placer l'élément détecteur interchangeable 16 parallèlement à l'axe du vérin et donc selon la direction de déplacement du piston ou de la tige de piston. Après le pré-serrage du collier 2, on amène le faisceau actif ou l'axe de vision 27 de l'élément capteur 16 en position par glissement axial du collier 2 sur le corps de vérin, la position du collier 2 en rotation étant en général indifférente et déterminée uniquement par les facilités de départ du fil isolé 10. Après le serrage définitif du collier 2 sur le corps du vérin cylindrique, le bloc isolé 8 reste en position fixe pour permettre le changement aisé de l'élément capteur 16 en cas de défaillance de celui-ci, sans avoir à effectuer aucun nouveau réglage de la position du collier 2. Le dispositif de capteur selon l'invention appliqué aux vérins à fluide, en particulier de petites dimensions ou microvérins, permet d'éviter l'utilisation de tirants de vérin spéciaux sur lesquels est fixé le capteur dans la solution connue.

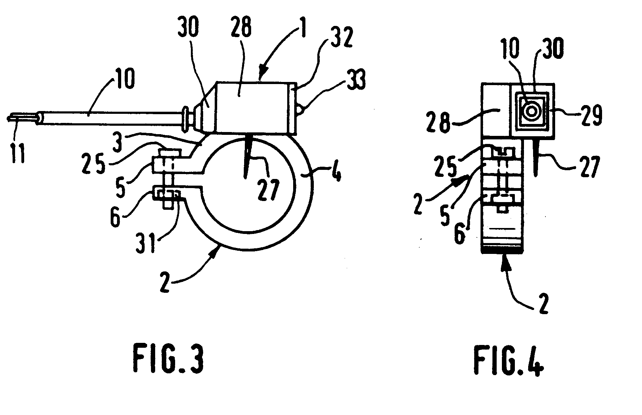

Selon le mode de réalisation représenté sur les figures 3 et 4, les parties du capteur 1 identiques à celles des figures 1 et 2 comportent les mêmes repères de référence que sur les figures 1 et 2. Le collier de serrage 2 forme ici également un monobloc avec le bloc supérieur multifaces mais ce dernier est réalisé avant l'équipement du capteur sous la forme d'un élément creux ou enveloppe 28 qui surmonte le collier 2 et dont une partie 29 vient se placer en porte-à-faux latéralement par rapport au collier 2. De cette partie 29 de l'enveloppe part un embout 30 de sortie du fil isolé 10 qui peut ainsi sortir du côté de la vis 25 sans gêner l'accès à la tête de cette vis pour assurer son vissage dans l'écrou 31 noyé dans le prolongement 6.

Au moment du montage du capteur selon les figures 3 et 4, l'élément détecteur proprement dit, non représenté sur les figures 3 et 4 et qui forme un bloc semblable à l'élément interchangeable 16 et raccordé à un fil isolé 10, est poussé à l'intérieur de l'enveloppe 28 pour y être mis en place après introduction du fil 10 à travers l'ouverture de l'embout 30. Après la mise en place de l'élément détecteur dans l'enveloppe 28, celle-ci est obturée par un couvercle 32 qui porte au moins une fenêtre transparente 33 de vision d'un témoin lumineux (non représenté) du capteur. Selon les conditions d'utilisation du capteur, l'axe de vision 27 de l'élément détecteur peut se trouver sur le plan médian du collier 2 ou bien, comme représenté à la figure 4, sur le plan médian de la partie 29 en porte-à-faux latéral. Grâce à ce dernier mode de réalisation, il est possible de serrer le collier 2 sur la partie accessible du corps d'un vérin tout en disposant l'axe de vision 27 de l'élément capteur en face d'une partie relativement inaccessible au montage de ce corps de vérin.

Les capteurs selon l'invention présentent des formes simples et esthétiques tout en assurant une économie importante, tant en ce qui concerne les coûts d'installation, que les coûts de maintenance et de gestion des pièces détachées, car il n'est plus nécessaire de disposer, pour l'entretien d'un parc de vérins équipés de capteurs, de tout un stock de tirants spéciaux supportant les capteurs.

## Revendications

1. Capteur ou détecteur électrique et/ou électronique pour un élément mobile dont la position est à repérer par rapport à un élément ou poste fixe, ce capteur comprenant des moyens de fixation sur l'élément ou le poste fixe (23,24), un élément détecteur (16) adapté en saillie sur ces moyens de fixation, un organe de connexion (14, 15) de l'élément détecteur aux moyens de fixation, et au moins un conducteur de raccordement (10, 11) destiné à relier l'élément détecteur (16) à un système de surveillance, caractérisé en ce que les moyens de fixation sont constitués par un collier de serrage annulaire (2), monobloc avec une enveloppe (8, 28) qui contient le raccordement électrique entre le conducteur et l'élément détecteur (16) et est réalisée en un matériau isolant électrique et élastique, en ce que le collier de serrage annulaire (2) est muni de deux prolongements élastiques (3, 4) qui sont susceptibles de se rapprocher l'un vers l'autre en coopération avec des moyens de serrage (5, 6, 25), l'élément détecteur (16) étant disposé en porte-à-faux latéral par rapport au plan médian du collier, de manière que l'axe de vision (27) de l'élément détecteur puisse être positionné fermement en face d'une partie de l'élément ou du poste fixe qui est située hors de la zone recouverte par le collier de serrage (2), et en ce que le conducteur de raccordement (10, 11) est raccordé à l'enveloppe isolée (8, 28), sensiblement de façon tangentielle par rapport au cercle du collier de serrage (2) afin d'éviter toute traction ou engagement axial du conducteur de raccordement, par rapport au collier (2) ou respectivement à l'élément mobile (21).

2. Capteur selon la revendication 1, caractérisé en ce que le conducteur de raccordement (10, 11) est raccordé à l'enveloppe (28) du côté des moyens de serrage (25) et de façon décalée par rapport à ces moyens de serrage, de manière à ne pas gêner l'accès aux moyens de serrage placés du côté dudit conducteur (10, 11).

3. Capteur selon les revendications 1 et 2, caractérisé en ce que l'enveloppe (8) de raccordement électrique entre le conducteur de raccordement (11) et l'organe de connexion forme un bloc à plusieurs faces (9, 12, 18, 19) et en saillie par rapport à la surface extérieure du collier de serrage (2).

4. Capteur selon les revendications 1 à 3, caractérisé en ce que les broches (17) ou bornes de l'organe de connexion (14, 15) sont orientées perpendiculairement à une face (12) de l'enveloppe (8) sensiblement parallèle au plan médian du collier (2), de manière que lesdites broches ou bornes soient sensiblement parallèles à l'axe médian (26) de ce collier.

5. Capteur selon les revendications 1 à 4, caractérisé en ce qu'une face externe de l'enveloppe (8, 28) porte des signes de repérage (20) du dispositif de détection ou des emplacements (18, 19) pour la mise en place de tels signes.

6. Capteur selon les revendications 1 à 5, caractérisé en ce que l'enveloppe (28) est susceptible d'être obturée, après mise en place de l'élément détecteur, par un couvercle (32) qui porte au moins une fenêtre transparente (33) de vision d'un témoin lumineux du capteur.

7. Application du capteur selon les revendications 1 à 6, à un organe mobile à repérer, tel qu'un piston ou une tige de piston de vérin à corps cylindrique, caractérisée en ce que le collier de serrage annulaire (2) est monté serré sur la surface extérieure du corps cylindrique de vérin, en orientant le ou les conducteurs de raccordement (10) tangentiellement par rapport à la section transversale du corps de vérin et en plaçant la partie active (27) de l'élément détecteur (16) en porte-à-faux latéral en face d'un point à repérer sur l'organe mobile (21), de manière à viser avec cette partie active (27) une partie du corps de vérin située hors du contact avec le collier de serrage (2).

**Patentansprüche**

1. Elektrischer und/oder elektronischer Sensor oder Fühler für ein bewegbares Element, dessen Position hinsichtlich eines festen Elementes oder Station anzuzeigen ist, welcher Sensor Befestigungsmittel am festen Element oder Station (23, 24), ein Sensorelement (16), das hinsichtlich der Befestigungsmittel vorsteht, ein Verbindungselement (14, 15) zur Verbindung des Sensorelementes auf die Befestigungsmittel, und wenigstens einen Leiter (10, 11) zur Verbindung des Sensorelementes (16) mit einem Überwachungssystem, einschliesst, dadurch gekennzeichnet, dass die Verbindungsmittel aus einem ringförmigen Spannband (2) bestehen, welches einstückig mit einer Hülle (8, 28) ausgestaltet wird, die die elektrische Verbindung zwischen dem Leiter und dem Sensorelement (16) enthält, und aus einem elektrisch isolierenden und elastischen Material ausgebildet ist, und dass das ringförmige Spannband (2) zwei elastische Verlängerungsstücke (3, 4) enthält, die unter Mitwirkung von Zusammendrückungsmitteln (5, 6, 25) zueinander bringbar sind, wobei das Sensorelement (16) seitlich fliegend hinsichtlich der mittleren Ebene des Bandes angeordnet ist, derart dass die Visionsachse (27) des Sensorelementes fest gegenüber einem Teil des festen Elementes oder Station welche ausserhalb des durch das ringförmige Spannband (2) bedeckten Bereichs liegt, positionierbar wird, und dass der Verbindungsleiter (10, 11) mit der isolierten Hülle (8, 28) im wesentlichen tangential bezüglich dem Kreis des ringförmigen Spannbandes (2) verbunden ist um jegliche Zugkraft oder axialen Eingriff des Verbindungsleiters bezüglich des Bandes (2) beziehungsweise des bewegbaren Elements (21) zu vermeiden.

2. Sensor nach Anspruch 1 dadurch gekennzeichnet, dass der Verbindungsleiter (10, 11) auf der Seite der Spannungsmittel (25) jedoch auf aufgesetzte Weise bezüglich dieser Spannungsmittel mit der Hülle (28) verbunden ist, derart dass der Zugang zu den Spannungsmitteln die auf der Seite des Verbindungsleiters (10, 11) liegen, nicht gestört wird.

3. Sensor nach Anspruch 1 und 2, dadurch gekennzeichnet, dass die Hülle (8) zur elektrischen Verbindung zwischen dem Verbindungsleiter (11) und dem Verbindungselement einen Block (9, 12, 18, 19) bildet welcher mehrere Seiten aufweist und bezüglich der Aussenseite des ringförmigen Spannbandes (2) vorsteht.

4. Sensor nach den Ansprüchen 1 bis 3, dadurch gekennzeichnet, dass die Klemmen (17) oder Anschlüsse des Verbindungselementes (14, 15) senkrecht zu einer der Mittellinie des Bandes (2) wesentlich parallel ausgerichteten Seite (12) der Hülse (8) ausgerichtet sind, derart dass die Klemmen oder Anschlüsse zur Mittelachse (26) dieses Bandes wesentlich parallel liegen.

5. Sensor nach den Ansprüchen 1 bis 4, dadurch gekennzeichnet, dass eine Aussenseite der Hülle (8, 28) Anzeichenmarken (20) des Sensorelementes oder der Stellen (18, 19) zur Einbringung solcher Marken einschliesst.

6. Sensor nach den Ansprüchen 1 bis 5, dadurch gekennzeichnet, dass die Hülle (28), nach der Einbringung des Sensorelementes, durch ein Deckelement (32) verschliessbar ist, welches wenigstens ein zur Beobachtung einer Anzeigelampe des Sensors durchsichtiges Fenster (33) trägt.

7. Anwendung des Sensors nach den Ansprüchen 1 bis 6 bei einem zu überwachenden beweglichen Glied, zum Beispiel einem Kolben oder einer Kolbenstange eines Betätigungsgerätes mit zylindrischem Körper, dadurch gekennzeichnet, dass das ringförmige Spannband (2) an der Aussenfläche des zylindrischen Körpers des Betätigungsgerätes festgespannt ist, wobei der oder die Verbindungsleiter (10) tangential zum Querschnitt des Betätigungskörpers orientiert werden, und der aktive Teil (27) des Sensorelementes (16) seitlich fliegend gegenüber einem beweglichen Element (21) des Festlegungspunktes angeordnet wird, derart dass auf einen Teil des Betätigungkörpers, welcher ausserhalb der Kontaktzone mit dem ringförmigen Spannband (2) anliegt, mit diesem aktiven Teil (27) gezielt wird.

## Claims

1. Electrical and/or electronic sensor or detector for a movable element the position of which is to be located with respect to a fixed element or station, said sensor including means for securing it onto said fixed element or station (23, 24), a detecting element (16) fitted in a projecting manner on said securing means, a connecting component (14, 15) for connecting said detecting element to said securing means, and at least one connection lead (10, 11) adapted to link said detecting element (16) to a monitoring system, characterized in that the securing means are made up by an annular clamping ring (2) integral with a casing (8, 28) containing the electrical connection between said lead and said detecting element (16) and provided in an electrically-insulating and resilient material, in that said annular clamping ring (2) is provided with two resilient extensions (3, 4) adapted to approach one another in cooperation with clamping means (5, 6, 25), said detecting element (16) being arranged in a lateral cantilevered manner with respect to the median plane of said clamping ring whereby the axis of vision (27) of the detecting element can be fixedly positioned opposite a portion of the said fixed element or station located outside of the region covered by said clamping ring (2), and in that said connecting lead (10, 11) is connected to said insulating casing (8, 28) substantially tangentially with respect to the circle of the said clamping ring (2) in order to avoid any traction or axial engagement of said connecting lead with respect to the clamping ring (2) or, respectively the movable element (21).

2. Sensor according to claim 1, characterized in that the connecting lead (10, 11) is connected to the casing (28) on the same side as the clamping means (25) and in an offset manner with respect to said clamping means, in order not to hinder access to the clamping means located on the same side as said lead (10, 11).

3. Sensor according to claims 1 and 2, characterized in that the housing (8) providing electrical connection between the connecting lead (11) and the said connecting component forms a block having a plurality of sides (9, 12, 18, 19) and arranged in a projecting manner with respect to the outer surface of the clamping ring (2).

4. Sensor according to claims 1 to 3, characterized in that the terminals (17) or pins of the connecting component (14, 15) are oriented perpendicular to one side (12) of said casing (8) that is substantially parallel to the median plane of the clamping ring (2), whereby said terminals or pins lie substantially parallel to the median axis (26) of the clamping ring.

5. Sensor according to claims 1 to 4, characterized in that an outer side of the casing (8, 28) carries locating marks (20) for the detecting element or locations (18, 19) for the placing of such marks.

6. Sensor according to claims 1 to 5, characterized in that the casing (28) is adapted to be closed off, after fitting of said detecting element, by a cover (32) which carries at least one transparent window (33) for viewing a pilot lamp of said sensor.

7. Application of the sensor according to claims 1 to 6 to a movable part which is to be located such as a piston or piston rod of an actuator with a cylindrical body, characterized in that the annular clamping ring (2) is mounted tightly clamped on the outer surface of the actuator cylindrical body, with the connecting lead or leads (10) being oriented tangentially with respect to the cross-section of the actuator body, placing the active part (27) of the detecting element (16) so as to overhang laterally facing a point on the movable element (21) the position of which is to be located, in order to cover with this active part (27) a portion of the actuator body that is located out of contact with the annular clamping ring (2).

FIG.1

FIG.2

FIG.3

FIG.4